Europäisches Patentamt

European Patent Office

Office européen des brevets

(11) Publication number: **0 382 860**

**A1**

# EUROPEAN PATENT APPLICATION

(21) Application number: 89102353.3

(51) Int. Cl.⁵: **E04H 4/12, C02F 1/68**

(22) Date of filing: **10.02.89**

(43) Date of publication of application:
**22.08.90 Bulletin 90/34**

(84) Designated Contracting States:
**AT BE CH DE ES FR GB GR IT LI LU NL SE**

(71) Applicant: **AQUALITY INC.**
**8938 Mason Avenue**
**Chatsworth, CA 91311(US)**

(72) Inventor: **Nicholson, Donald**
**20314 Mobile**
**Canoga Park, California(US)**
Inventor: **Nordmeyer, Robert**
**5034 Marmol Drive**
**Woodland Hills, California(US)**
Inventor: **Boyle, Greg**
**487 Gainsborough Road No.203**
**Thousand Oaks, California(US)**
Inventor: **Connors, Edward**
**3227 Sunburst Place**
**Thousand Oaks, California(US)**

(74) Representative: **Baillie, Iain Cameron**
**c/o Ladas & Parry Isartorplatz 5**
**D-8000 München 2(DE)**

(54) Swimming pool chemical dispenser.

(57) A device for use in a swimming pool to continu-
ously dispense chlorine for sanitizing the water is
disclosed which is advantageously made in a sturdy
fashion of five main segments which may be molded
using only simple and inexpensive molds, and
snapped together with only a single adhesive opera-
tion required to seal the waterproof float assembly.
The device utilizes a metering mechanism (80) de-
signed for precise adjustment of the rate of disper-
sion of the chemical (600) contained in the feeder,
the metering mechanism (80) preventing inadvertent
readjustment caused by the device being bumped.
Further features of the device include a childproof
cap (120) requiring a two stage process for removal
of the cap (120), the provision of an indication that
the device has either depleted or nearly depleted its
chlorine supply, and a tether to maintain the feeder
in a central location in the swimming pool.

FIG. 22

## BACKGROUND OF THE INVENTION

Field of the Invention-

The present invention relates generally to devices for dispensing chemicals into swimming pools to maintain the quality and clarity of water therein, and more particularly to a floating dispenser of novel construction for containing solid chemical pellets or tablets therein which are dispensed essentially continuously by nature of dissolution of the solid pellets or tablets by water flowing through the floating dispenser.

Untreated water in both above-ground and below-ground swimming pools tends to deteriorate relatively rapidly due to the growth of bacteria and other organic matter such as algae which result in untreated water quickly becoming both unsanitary and unclear. When the pool water remains untreated for several days, it represents a health hazard to swimmers, and a cleanup problem due to the growth of algae on the surface of the pool.

Water soluble chemicals are added to the pool water to kill the bacteria and to retard the growth of algae. Typically, chlorine is the chemical used to maintain water quality, with the periodic administration of a dose of a liquid solution containing chlorine being the most commonly used treatment. This has some disadvantages, mainly in that a large dosage of chlorine is periodically released, as for example in a daily administration of the liquid treatment to the swimming pool. The chlorine level of the water in the pool will therefore vary considerably during the course of even one day, with the chlorine concentration being higher than desirable immediately after the administration of liquid chlorine, and lower than desirable after the chlorine has partially dissipated over a period of time. This diminution in chlorine concentration may vary considerably due to the size and temperature of the pool, the weather, and the amount of use the pool is experiencing as well as other factors.

It is apparent to those knowledgeable in the art that it is instead desirable to maintain the chlorine level at a more or less constant concentration by dispensing the chlorine more frequently, which is impractical in most cases, or by using a specially designed device to dispense the chlorine continuously at a rate designed to maintain a desired concentration in the pool. An early example of such a device is shown in U. S. Patent No. 3,202,322, to Cleary et al., which teaches a floating dispenser of liquid chemicals which uses a wick to control the rate of propagation of the liquid chemicals into the water of a pool or other body of water. The Cleary et al. device will dispense the liquid into the water continuously, but it is quite difficult to adjust the rate at which the liquid is dispensed. In fact, the removal and replacement of the wick or other components with different sizes of wicks or other components is required to adjust the flow rate of the device.

It is thusly apparent that an important requirement for a chemical dispenser for a swimming pool is its ability to be easily and conveniently adjusted to provide a variable rate of dispersion of the chemicals into the pool to accommodate different pool sizes and other factors influencing the amount of chemicals necessary to be dispensed. A second factor has been found to be the physical nature of the chemical dispensed. While the Cleary et al. device dispenses liquid chemicals, for most people the preferred type of chemicals are the solid chemical pellets or tablets which are more convenient to use than are liquid chemicals.

The chemicals which are currently most widely used in swimming pools for either continuous or daily treatment are the trichloroisocyanurates, which are generally referred to as tri-chlor. In tablet form trichloroisocyanurates may last as long as one to two weeks, and they leave no residue after dissolving. Although they have the advantage of leaving no residue, they dissolve relatively quickly and therefore only tablets may be used, since pellets would not last for even a week.

Another type of solid pool disinfectant chemical in use is calcium hypochlorite, which is relatively inexpensive and convenient to use. Calcium hypochlorite tablets last for an extended length of time, such as for example two weeks or more in a floating or skimmer feeder. The disadvantage of calcium hypochlorite pellets is that they leave a residue in the floating feeder or on the bottom of the pool after dissolving. Calcium hypochlorite is used mainly for infrequent shock treatments for this reason.

Examples of skimmer feeders are shown in U. S. Patent No. 4,546,503, to Casberg, and in U. S. Patent No. 4,643,881, to Alexander et al. Such feeders are used in forced circulation flow pool systems having a skimmer basket at the location at which water is removed from the pool. The feeder has solid chemical tablets or pellets (referred to hereafter generically as "chlorine tablets") placed inside, and the feeder is placed in the skimmer basket. Chlorine is added to the water as it is drawn out of the pool for filtering and heating. Skimmer feeders are frequently used in large and frequently used pools, such as for example in hotel pools. The Alexander et al. device has the additional feature of inverting to indicate when the chlorine tablets are exhausted.

Floating feeders are buoyant devices, generally molded of plastic and designed for carrying solid tablets or pellets below the water surface while the device is floating. By either varying the area through which water may flow through the feeder, or by varying the amount of chlorine tablets placed in the feeder, or both, the flow rate of chlorine into the pool water is controlled. The area through which water may flow is usually set by adjusting the area of apertures in the lower sides of the floating feeders. Floating feeders are relatively inexpensive and easy to use, and as such have found particular favor in the home pool market.

Floating feeders currently in use are remarkably effective devices, but they do have several disadvantages. One of these disadvantages is that the feeders are typically made of molded plastic segments with complex shapes, requiring expensive and large size molds to manufacture them. In addition, the more ambitious floating feeders (those capable of performing their intended function relatively well and with an acceptable degree of precision) typically are made of several segments, which may have to be glued or otherwise attached together. These designs require a considerable initial investment in molds, in manufacturing equipment, and in labor to assemble them, with a corresponding increase in costs which must be passed on to the consumer. When faced with a choice between inexpensive (and less effective) floating feeders and the more expensive (and more effective) feeders, many consumers will make their choice on the basis of price.

Accordingly, it is an objective of the present invention to present a floating feeder which is both effective and easily and inexpensively manufactured. In the construction of the feeder, all complex forms are to be avoided so as to require only simple and inexpensive molds in the manufacture of the device. In addition, it is an objective of the present invention to use the absolute minimum of adhesive operations; instead, to the greatest extent possible the improved feeder should use snap-together operation.

Most feeders use a similar type of metering mechanism for selecting the size of the apertures through which water flows into and out of the feeder, and hence the dispersion rate of chlorine into the pool water. This preferred metering mechanism uses a first piece having a plurality of apertures therethrough, which apertures represent the maximum size aperture of the device. A second piece which is typically rotatable with respect to said first piece allows the apertures to be selectively, partially closed to select the amount of water which may flow through the portion of the device containing the chlorine tablets. In this way the dispersion rate of the chlorine into the water may be controlled.

The fact that the above-described metering design is susceptible to undesirable changes in the rate of chlorine dispersion due to inadvertent changes in the size of the apertures through which water flows represents another disadvantage in existing floating feeders. Devices allowing relative rotation between adjacent parts are in most cases secured together by a single rotatable joint such as a screw or rivet. Inadvertent changes in the metering mechanism are usually caused by the feeder being bumped, either by swimmers in the pool or by the feeder being thrown into the edge of the pool by waves in the pool. Upon being bumped the metering mechanism will be unable to resist relative motion between the first and second pieces, causing the size of the apertures to be increased or decreased.

Another problem with existing floating feeders is that due to the above-described design of the metering mechanism, the rate of dispersion is not precisely setable. This is particularly true with the more inexpensive floating feeders. Often an adjustment of only one-quarter inch is sufficient to move the apertures from fully open to fully closed. Such feeders are also relatively fragile and may be easily broken, with this disadvantage being particularly evident in inexpensive feeders.

Thus, it is a further objective of the present invention to provide a metering mechanism which is completely resistant to changes in the dispersion rate caused by bumping of the feeder, however severe. It is an objective of the present invention that the adjustment of the metering mechanism over a wide range of dispersion rates be easily, quickly, and conveniently accomplished with a high degree of accuracy. Further, the metering mechanism should be assembled in more secure fashion than by a single rotatable joint, thus preventing both flimsy designs susceptible to easily breaking, and accidental readjustment of the feeder apertures.

Yet another problem in the design of floating feeders currently in use is that they are not for the most part designed for families having small children. The tops of currently available feeders have no mechanism which effectively prevents them from being opened by small children. Feeders generally will be moved by either the wind or by water currents to the side of a swimming pool, where they present an attraction to curious children. If the top of a feeder is removed, the chlorine pellets in the feeder are an accessible hazard about which most parents having pools are concerned.

It is therefore an additional object of the present invention to provide a childproof cap for a floating feeder. The childproof cap should effectively prevent small children from opening the feeder, yet allow easy access by adults to add more chlorine tablets to the feeder. The marketability of a feeder with a childproof cap will be readily apparent to those skilled in the art. When faced with a choice between a floating feeder having a childproof cap and one not having a childproof cap, consumers with small children will virtually always choose the feeder with the childproof cap.

Still another problem with floating feeders currently in use is that they do not indicate to the user when they need to be refilled with chlorine tablets. Consequently, users of floating feeders are forced to periodically check them to ensure that they are adequately supplied with chlorine tablets. While this is not a major task, it is an inconvenience and requires that the pool owner remember to periodically check the feeder.

Thus, it is a further objective of the present invention to present a floating feeder which has built into it means to provide a visual indication that the feeder has little or no chlorine remaining therein, and needs to be refilled. The visual indication should be so readily apparent that even a casual glance in the general direction of the feeder will indicate to an observer that the feeder needs to be refilled.

Finally, the very nature of a floating feeder is that it floats in a swimming pool, free to drift due to the wind or, in the absence of wind, to be drawn to the skimmer of the pool due to the forced circulation of water. Since once a floating feeder has been drawn to the location of the skimmer by water currents in the pool a strong wind is required to move it away, floating feeders tend to remain at or near the location of the skimmer for most of the time. Since the feeder is continuously dispensing chlorine, which is a bleach, over a period of time the portion of a swimming pool near the skimmer will tent to become discolored due to the bleaching action of the chlorine, which is concentrated in the area of the skimmer.

While it takes some time for the result to become noticeable, the effect of the use of a floating feeder is inevitable. Since the discoloration tends to increase with time, it may become distasteful in a matter of several years, requiring major and expensive work to remedy.

It is accordingly a still further object of the present invention to present a floating feeder which is both effective and which also contains means to prevent the feeder from being drawn to the same spot adjacent the edge of a swimming pool. The solution to the problem must either keep the feeder away from the edges of the swimming pool, or ensure that the feeder will not spend an inordinate amount of time in any one spot to prevent the occurrences of isolated discolorations of the pool.

While attaining these objectives, the improved feeder should have excellent strength and durability characteristics throughout to ensure a long life. The aforesaid objectives must be accomplished by a design which is at once effective and easily and inexpensively manufactured, using as few parts as possible and snap-together assembly whenever possible. Finally, the aforesaid advantages and objectives must all be attained while incurring no relative disadvantage.

## SUMMARY OF THE INVENTION

The disadvantages and limitations of the background art discussed above are overcome by the present invention. With a first aspect of this invention, a floating feeder incorporating five main molded segments is taught which may be manufactured without using complex and expensive molds and equipment. The general configuration of the floating feeder has the advantages of being manufacturable using only simple molds, of having components locked to each other to prevent undesirable rotation therebetween, and having a snap together assembly of all components save the assembly of the float assembly, which must be a watertight compartment to ensure that the device will float.

The float assembly is manufactured in two segments: a top half and a bottom half. The two halves of the float are configured to allow them to be attached together to form a watertight assembly using either adhesive joints as in the preferred embodiment, or by using an ultrasonic device to seal the joints. This is the only instance in the design of the floating dispenser of the present invention in which a gluing operation is necessary, with the rest of the assembly being accomplished by snapping the various components together.

Mounted below the float assembly is the metering valve assembly, which is made up of two components: a metering valve body and a metering valve cap. The metering valve body is attached to the bottom of the float assembly by inserting the top of the metering valve into the bottom of the float assembly. A tapered snap fit ensures that the top of the metering valve body will enter bottom of the float assembly relatively easily, and once inserted will be difficult to remove.

In a second aspect of the present invention, the metering valve body is essentially formed by two cylindrical segments, the top one of which cylinders is of slightly larger diameter than the bottom cylinder. The top of the top cylinder is the portion of the metering valve body which is inserted into and retained in the bottom float. The upper portion of the bottom cylinder has a plurality of longitudinally extending ribs with apertures therebetween, the top ends of which ribs are attached to the bottom of the top cylinder. The plurality of apertures are to allow water to flow therethrough to contact chlorine tablets which will be placed in the device. The lower portion of the bottom cylinder has threads around the outer surface thereof. A tapered shoulder is located circumferentially around the bottom cylinder of the metering valve body intermediate the ribs and the threads.

The metering valve cap is designed to fit over the metering valve body. The metering valve cap is essentially cylindrical and the size of the top cylinder of the metering valve body. The bottom side of the metering valve cap is closed to seal the bottom of the metering valve assembly, so that chlorine tablets placed in the device will rest on the bottom of the metering valve assembly. At the top of the metering valve cap is a shoulder extending slightly inwardly, and inside the metering valve cap and towards the bottom thereof are located threads.

The open top of the metering valve cap is placed over the bottom of the metering valve body, until the shoulder on the metering valve cap is forced past the threads and over the shoulder on the metering valve body. At this point the threads in the metering valve cap contact the threads on the bottom cylinder of the metering valve body, and the apertures between the ribs on the metering valve body are completely open. The metering valve cap may then be moved turned to move it longitudinally on the metering valve body, thereby selectively closing the apertures in the metering valve body to the degree desired. It will be appreciated that the shoulders on the metering valve body and the metering valve cap cooperate to prevent the cap from inadvertently coming completely off the metering valve body when the metering valve cap is unscrewed.

The float has an aperture in the top thereof through which chlorine tablets may be placed in the device. The aperture is sealed with a float cap which mounts into the aperture to seal it from the top side. In a third aspect of the present invention, the float cap and the float top have located therein cooperating mechanisms for engagement in a childproof fashion. The mechanism utilizes an interlocking bead design having beads of two different sizes located in both the float cap and in the float top. The float cap has a cylindrical portion which is received by the aperture in the top of the float top when the float cap is installed. Around the outer circumference of this cylindrical portion of the float cap are two portions with a wide bead alternating with two potions with a narrow bead. Each of the wide bead portions extend for slightly less than ninety degrees around the cylindrical portion, and each of the narrow bead portions extend for slightly more than ninety degrees around the cylindrical portion.

Located around the interior of the aperture in the float top are corresponding, alternating wide and narrow bead portions, with each wide bead portion again extending for slightly less than ninety degrees around the cylindrical portion, and each narrow bead portion extending for slightly more than ninety degrees around the cylindrical portion. The cylindrical portion of the float cap is inserted into the aperture in the float top with the wide beads on the float cap aligned with the narrow beads on the float top, and with the narrow beads on the float cap aligned with the wide beads on the float top. In this position, the float cap is inserted by overcoming a small resistance caused by the pressing-type interference fit between the corresponding wide and narrow beads.

The float cap is then turned ninety degrees with respect to the float top, with the wide beads on the float cap and the float top being aligned, and the narrow beads on the float cap and the float top being aligned. This draws the float cap tightly down onto the float top, and is a rotational interference fit requiring an amount of force determined by the degree of the interference fit. The float cap can not be removed from the float top in this position.

Since it will be difficult for a child to move the cap because it requires more force than most small children can provide, the float cap is installed in a childproof fashion. Even if the child were to succeed in turning the float top ninety degrees, which is unlikely, the child would still have to overcome the interference fit to pull the cap off. The float cap is removed by turning it ninety degrees (preferably in the opposite direction as in installation), and by pulling it upward with sufficient force to overcome the interference fit.

In a fourth aspect of the floating feeder, the float assembly is used to support the weight of the feeder and the chlorine tablets contained in the feeder. Accordingly, the float assembly will be partially above and partially below the waterline, with the actual waterline on the float assembly being determined by how much chlorine remains in the device. The floating feeder in recognizing this principle takes advantage of it by making the float top and the float bottom in different colors, and by configuring the relative size of the float top and the float bottom to cause the float bottom to appear above the waterline when it is time to add chlorine.

Accordingly, when the feeder contains sufficient chlorine tablets the float bottom will be below the waterline, and the color of the float bottom will not be apparent. In order to further this visual perception, in the preferred embodiment the float bottom is of a darker color or a color not readily apparent when the float bottom is below the waterline. When most or all of the chlorine tablets have dissolved, the weight supported by the float assembly will be less, a portion of the float bottom will be above the waterline, and the color of the float bottom will be apparent.

In a first variation from this operation, the device can be configured so that a portion of the float bottom will be above the waterline and the color of the float bottom will be visible when several days supply of chlorine remain. For example, it may be desirable to provide an indication when the feeder contains three days supply of chlorine or less. This may be easily accomplished by making the division in the float assembly between the float top and the float bottom at a point slightly above the waterline when the feeder contains three days supply of chlorine. In this design, as the amount of chlorine is further depleted the float bottom will float higher and higher, making the color of the float bottom more and more visible.

It will be apparent that several different floating feeders could be manufactured, each with a different warning period prior to chlorine tablet depletion. In an alternate embodiment, this is made unnecessary by a design modification. In this embodiment the device is made to provide a warning with the float bottom rising above the waterline when the maximum desired warning period is reached. For example, the warning could be provided when there are four days of chlorine tablets remaining. A series of four small weights, each equal to the weight of one day's chlorine tablets could be supplied with the feeder. By placing between one and four of the small weights in the feeder, the warning period is reduced to between three and zero days, respectively.

In a fifth aspect of the present invention, the float top is manufactured with a small retainer recess molded therein. The retainer recess is designed to accommodate a retainer, which has a tapered shoulder therein to allow the retainer to be easily plugged into the retainer recess in the float top, while resisting being removed once installed. A length of tether cord has one end thereof attached to the retainer, which thereby secures that end of the tether cord to the float top.

The other end of the tether cord is secured to a retaining hook, which includes a flat surface therein on which waterproof double-sided tape or the like may be attached. Using the double-sided tape the flat surface of the retaining hook is attached to the middle of the side of the pool opposite the skimmer used to draw water out of the pool for filtering and heating. It will at once be appreciated by those skilled in the art that the water currents in the pool due to the forced flow out through the skimmer will tend to draw the floating feeder out from the side of the pool to which it is attached, towards the skimmer.

By making the retaining cord an appropriate length, the feeder will be secured well out from the edges of the pool, where the chlorine may be released and mix with the pool water before contacting the sides or bottom of the pool. The discolorization of the sides of the pool near the skimmer (or near any other one area) is thus avoided. Even though winds may force the skimmer into contact with a wall, most probably the wall to which it is secured, during most of its time in the pool the skimmer will not remain near an edge of the pool.

Accordingly, it may be seen that the present invention presents in a first aspect a floating feeder which is both effective and easily and inexpensively manufactured. In the construction of the feeder, all complex forms are avoided so as to require only simple and inexpensive molds in the manufacture of the device. In addition, in the construction of the floating feeder of the present invention only a single adhesive operation is required to seal the float; instead, to the greatest extent possible the improved feeder uses snap-together operation.

In a second aspect, the floating feeder of the present invention provides a metering mechanism which is completely resistant to changes in the dispersion rate caused by bumping of the feeder, however severe. The adjustment of the metering mechanism over a wide range of dispersion rates is easily, quickly, and conveniently accomplished with a high degree of accuracy. Further, the metering mechanism is assembled in more secure fashion than by a single rotatable joint, thus preventing both flimsy designs susceptible to easily breaking, and accidental readjustment of the feeder apertures.

The floating feeder of the present invention also includes in a third aspect thereof a childproof cap. The childproof cap effectively prevents small children from opening the feeder, yet allow easy access by adults to add more chlorine tablets to the feeder.

In a fourth aspect of the floating feeder of the present invention, the floating feeder has built into it means to provide a visual indication that the feeder has little or no chlorine remaining therein, and needs to be refilled. The visual indication is so readily apparent that even a casual glance in the general direction of the feeder will indicate to an observer that the feeder needs to be refilled.

Finally, in a fifth aspect, the floating feeder of the present invention also presents a floating feeder which is both effective and which contains means to prevent the feeder from being drawn to the same spot adjacent the edge of a swimming pool. The feeder is thus kept away from the edges of the swimming pool, thereby ensuring that the feeder will not spend an inordinate amount of time in any one spot to prevent the occurrences of isolated discolorations of the pool.

While attaining these objectives, the improved feeder has excellent strength and durability characteristics throughout to ensure a long life. The aforesaid objectives are accomplished by a design which is at once effective and easily and inexpensively manufactured, using as few parts as possible and snap-together assembly virtually throughout. Finally, the aforesaid advantages and objectives are all attained while incurring no relative disadvantage.

DESCRIPTION OF THE DRAWINGS

These and other advantages of the present invention are best understood with reference to the drawings, in which:

Figure 1 is a plan view from the top side of the float top of the present invention which is of a first color, illustrating the narrow and wide beads used to retain the float cap, and also showing the cord retainer recess;

Figure 2 is a sectional view of the float top of Figure 1 illustrating the float top inner and outer cylinders used to form the top half of a sealed float compartment, and also showing the cord retainer recess;

Figure 3 is an enlarged portion of the sectional view of the float top in Figure 2 showing the tongue located on the bottom side of the float top inner cylinder;

Figure 4 is an enlarged cutaway view of a portion of the float top shown in Figure 1 showing one of the narrow beads located inside the float top inner cylinder and near to the top side thereof;

Figure 5 is an enlarged cutaway view of a portion of the float top shown in Figure 1 showing one of the wide beads located inside the float top inner cylinder and near to the top side thereof;

Figure 6 is a plan view from the bottom side of the float bottom of the present invention which is of a second color, showing the shoulder and three tabs used to secure the metering valve body to the float assembly;

Figure 7 is a sectional view of the float bottom shown in Figure 1 illustrating the float bottom inner and outer cylinders used to form the bottom half of the sealed float compartment, and also showing the shoulder and one of the tabs used to secure the metering valve body;

Figure 8 is an enlarged view of a portion of the float bottom as shown in Figure 6, showing a portion of the shoulder and one of the tabs used to secure the metering valve body;

Figure 9 is an enlarged view of a portion of the float bottom as shown in Figure 7, showing a portion of the shoulder and one of the tabs used to secure the metering valve body;

Figure 10 an enlarged portion of the sectional view of the float bottom in Figure 7, showing the groove located on the top side of the float bottom inner cylinder;

Figure 11 is a plan view from the top of the metering valve body showing the three notches for placement around the three tabs on the float bottom of Figure 6, and also showing from the top the configuration of the metering valve ribs and the apertures formed therebetween;

Figure 12 is a sectional view of the metering valve body shown in Figure 11, showing the configuration of the metering valve ribs and the apertures formed therebetween, the shoulder used to retain the metering valve cap on the metering valve body, and the threads on the outside of the lower portion of the metering valve body lower cylinder;

Figure 13 is an enlarged view from the side of the metering valve wide rib containing the position markings used to indicate the degree to which the apertures located between the metering valve ribs are opened or closed by the metering valve cap;

Figure 14 is a plan view from the top side of the metering valve cap showing the location of the two tabs used to prevent inadvertent relative movement between the metering valve cap and the metering valve body;

Figure 15 is a sectional view of the metering valve cap shown in Figure 14, showing the threads on the inside of the lower portion of the metering valve cap;

Figure 16 is an enlarged cutaway view of a portion of the metering valve cap of Figure 15, showing the configuration of one of the two tabs used to prevent inadvertent relative movement between the metering valve cap and the metering valve body;

Figure 17 is a plan view from the top side of the float cap used to close the aperture in the top of the float top;

Figure 18 is a plan view from the bottom of the float cap shown in Figure 17, illustrating the location of the narrow and wide beads on the bottom of the float cap which are for engagement of the narrow and wide beads in the float top;

Figure 19, is a sectional view of the float cap shown in Figures 17 and 18 showing the portion thereof used to grip the float cap;

Figure 20 is a view from the side of the cord retainer used to retain one end of the tethering cord to the float top;

Figure 21 is a view from the side of the retainer hook used to retain the other end of the tethering cord to the side of a swimming pool;

Figure 22 is a side view of the assembled floating dispenser of the present invention partially cut away to show details of assembly;

Figure 23 is a view from the top of the dispenser of the present invention with the float cap in a closed position;

Figure 24 is a partial cutaway view of the float cap and the float top showing the alignment of beads between the float cap and the float top with the float cap in the closed position of Figure 23;

Figure 25 is a partial cutaway view of the float cap and the float top in a different location than that shown in Figure 24 showing the alignment of beads between the float cap and the float top with the float cap in the closed position of Figure 23;

Figure 26 is a view from the top of the dispenser of the present invention with the float cap in an open position;

Figure 27 is a partial cutaway view of the float cap and the float top showing the alignment of beads between the float cap and the float top with the float cap in the open position of Figure 26;

Figure 28 is a partial cutaway view of the float cap and the float top in a different location than that shown in Figure 27 showing the alignment of beads between the float cap and the float top with the float cap in the open position of Figure 26;

Figure 29 is a schematic view from the top of a pool having the dispenser of the present invention installed therein;

Figure 30 is a view of the dispenser of the present invention floating in water, showing the water line when the dispenser has an adequate supply of chlorine therein; and

Figure 31 is a view of the dispenser of the present invention floating in water, showing the water line when the dispenser does not have an adequate supply of chlorine therein.

## DETAILED DESCRIPTION OF THE PREFERRED EMBODIMENT

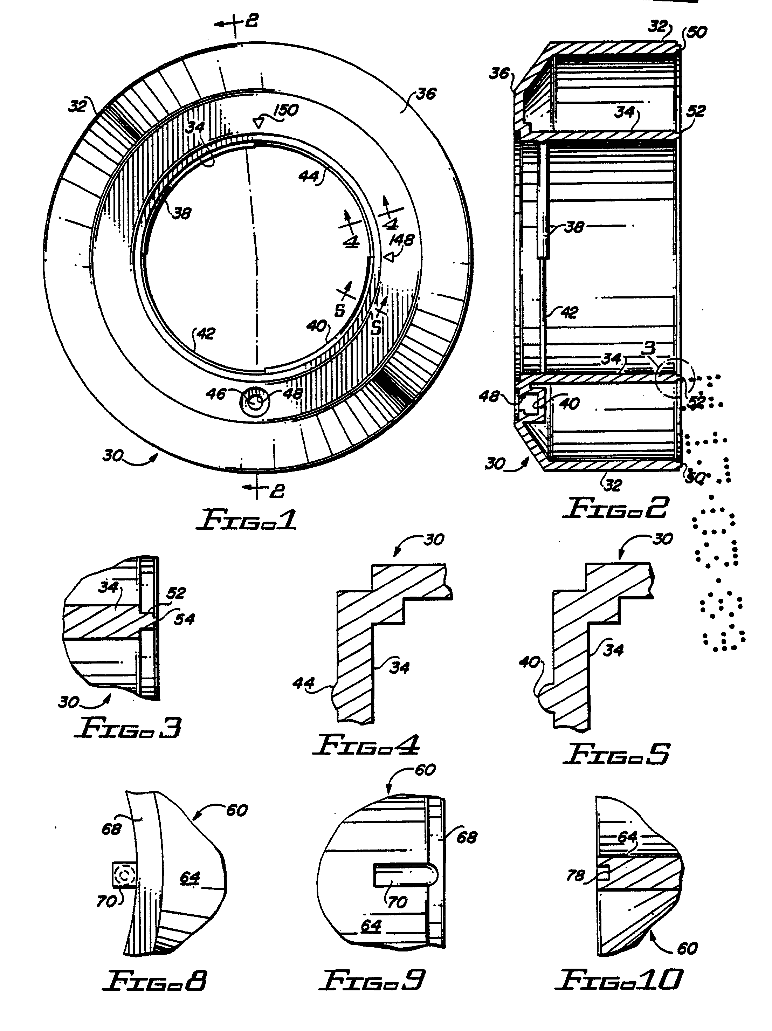

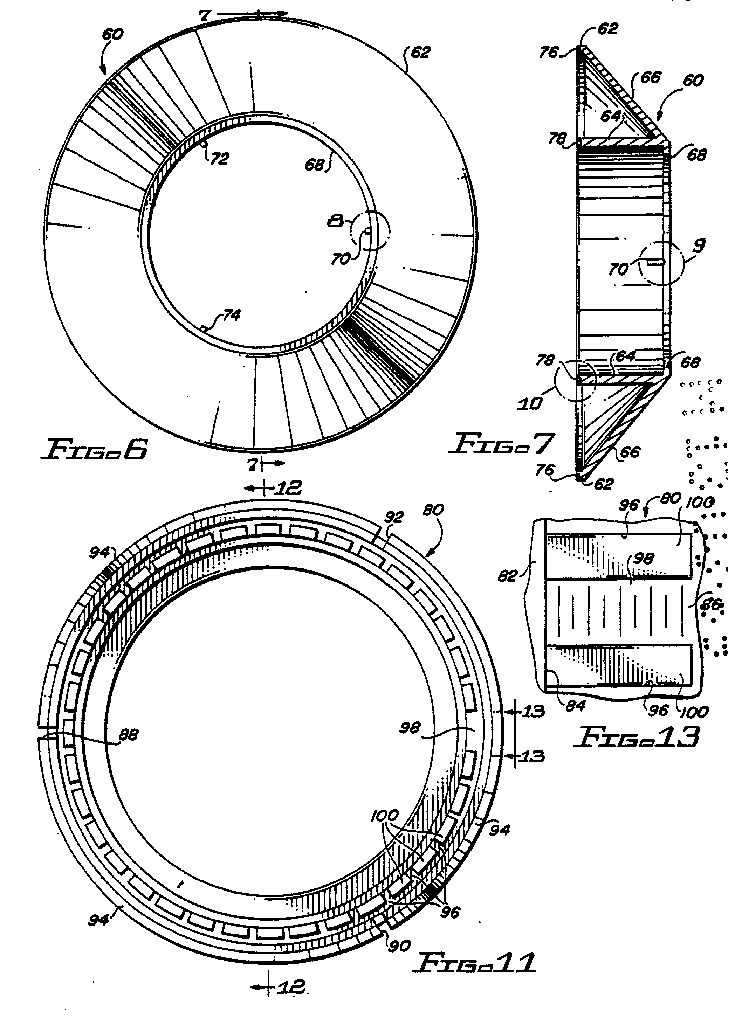

The preferred embodiment of the present invention uses a number of parts, the construction of which parts will be discussed first before discussing the operation of the device. The float assembly is made of two parts, the first of which is a float top 30 which is shown in Figures 1 and 2. The float top 30 forms the top half of a sealed area which will be used to provide buoyancy to the feeder. This top half of the sealed area is located between a float top outer cylinder 32 and a float top inner cylinder 34. The tops of the float top outer cylinder 32 and the float top inner cylinder 34 are both sealingly connected to a the top surface 36 extending therebetween, which top surface 36 is shown in the figures to be flat adjacent the float top inner cylinder 34 and angled slightly for aesthetic effect near the float top outer cylinder 32.

It will be perceived that the area inside the float top inner cylinder 34 is open, both at the top and at the bottom thereof. Located circumferentially around the inside surface of the float top inner cylinder 34 at a location near to the top of the float top inner cylinder 34 are an end-to-end series of four raised beads. Two of the beads are wide beads 38 and 40, and two of the beads are narrow beads 42 and 44. The wide bead 38 is located intermediate the narrow bead 42 and the narrow bead 44, the narrow bead 42 is located intermediate the wide bead 38 and the wide bead 40, the wide bead 40 is located intermediate the narrow bead 42 and the narrow bead 44, and the narrow bead 44 is located intermediate the wide bead 40 and the wide bead 38.

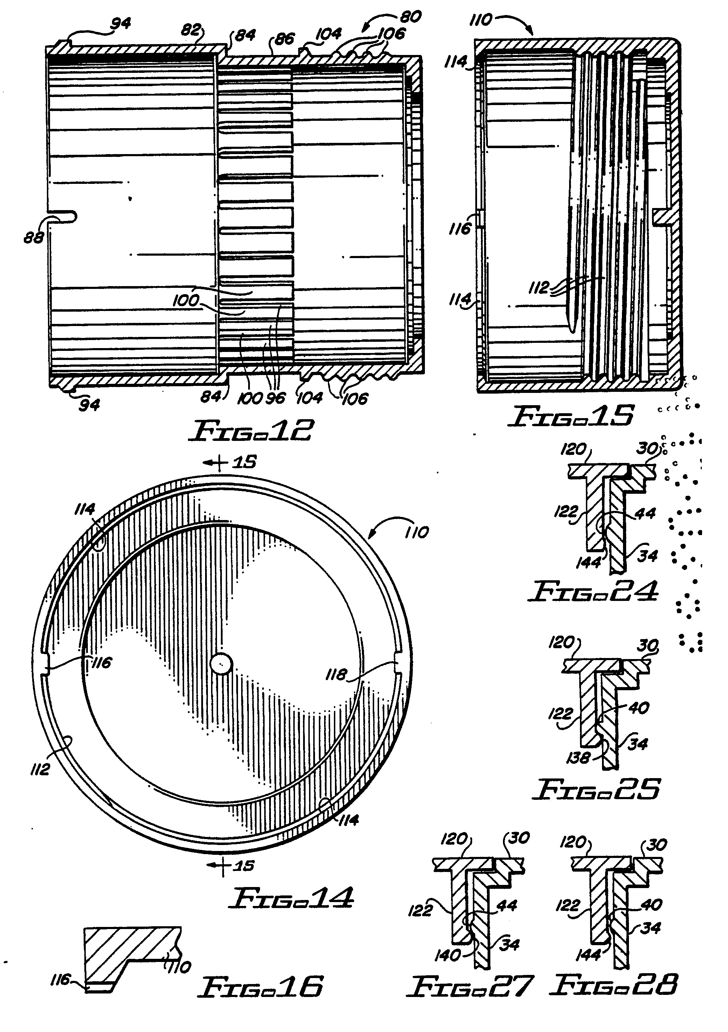

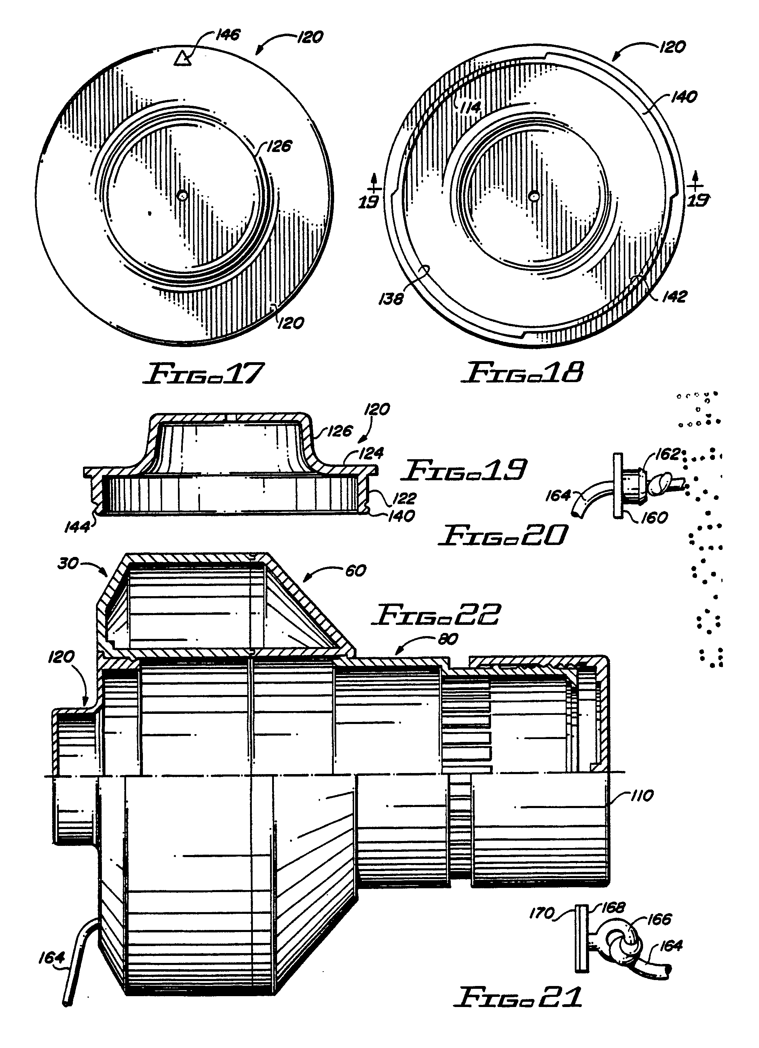

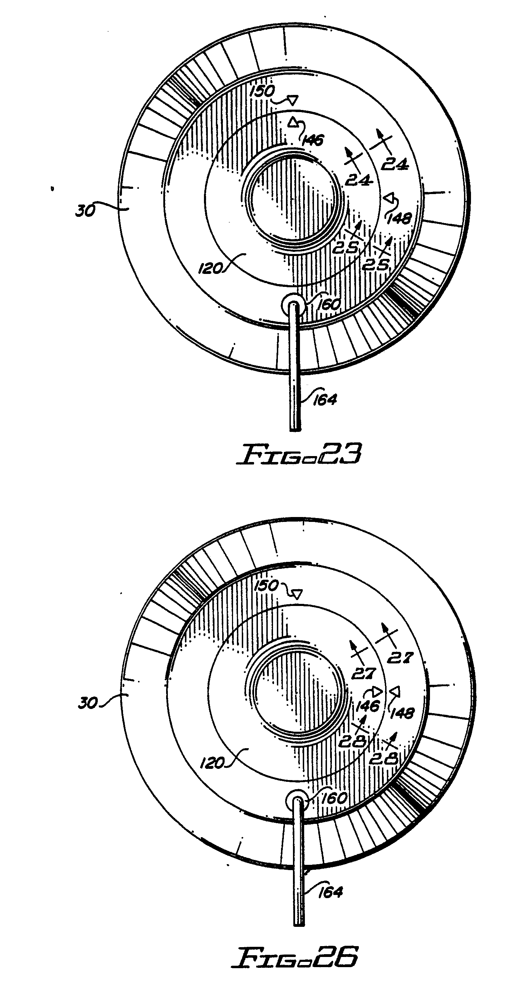

The narrow bead 44 is shown in cross-section in Figure 4, and the wide bead 40 is shown in cross-section in Figure 5. The wide bead 38 is identical to the wide bead 40, and the narrow bead 42 is identical to the narrow bead 44. The wide beads 38 and 40 have the same height in cross section as the narrow beads 42 and 44, but the wide beads 38 and 40 project further inwardly from the float top inner cylinder 34 than do the narrow beads 42 and 44. In the preferred embodiment, the wide beads 38 and 40 project inwardly from the float top inner cylinder 34 approximately four times as far as do the narrow beads 42 and 44. As a matter of practicality, the wide beads 38 and 40 should project inwardly at least twice as far as do the wide beads 40 and 42.

Each of the narrow beads 42 and 44 extend around the interior of the float top inner cylinder 34 for slightly more than ninety degrees, and each of the wide beads 38 and 40 extend around the float top inner cylinder 34 for slightly less than ninety degrees. In the preferred embodiment, for example, each of the narrow beads 42 and 44 extend around the interior of the float top inner cylinder 34 for ninety-three degrees, and each of the wide beads 38 and 40 extend around the float top inner cylinder 34 for eighty-seven degrees. The reasons for this configuration will become evident later in conjunction with the discussion of the assembly and operation of the device.

Disposed in the top surface 36 of the float top 30 is a cord retainer recess 46. The cord retainer recess 46 has disposed below the plane of the top surface 36 a reduced diameter shoulder 48, and but for the presence of the reduced diameter shoulder 48 the cord retainer recess 46 would be an essentially cylindrical recess with the bottom sealed. That the bottom of the cord retainer recess 46 is sealed is essential to the watertight construction of the float assembly, of which the top half is formed between the float top outer cylinder 32 and the float top inner cylinder 34, and under the top surface 36.

The bottom edge of the float top outer cylinder 32 has extending downwardly therefrom an essentially cylindrical tongue 50 narrower than the thickness of the float top outer cylinder 32. Likewise, the bottom edge of the float top inner cylinder 34 has extending downwardly therefrom an essentially cylindrical tongue 52 narrower than the thickness of the float top inner cylinder 34. The cylindrical tongue 52 is shown in detail in Figure 3, and the cylindrical tongue 50 is identical in cross-sectional configuration to the cylindrical tongue 52. In the preferred embodiment the cylindrical tongues 50 and 52 are slightly tapered approaching the bottoms thereof.

The cylindrical tongue 52 has extending downwardly therefrom a raised bead 56, which is small compared to the width of the cylindrical tongue 52. Similarly, the cylindrical tongue 50 also has a raised bead 54 (not shown), which is small compared to the width of the cylindrical tongue 50. The purposes of the cylindrical tongues 50 and 52 and the raised beads 54 and 56 will become evident later in conjunction with the discussion of the assembly of the float assembly.

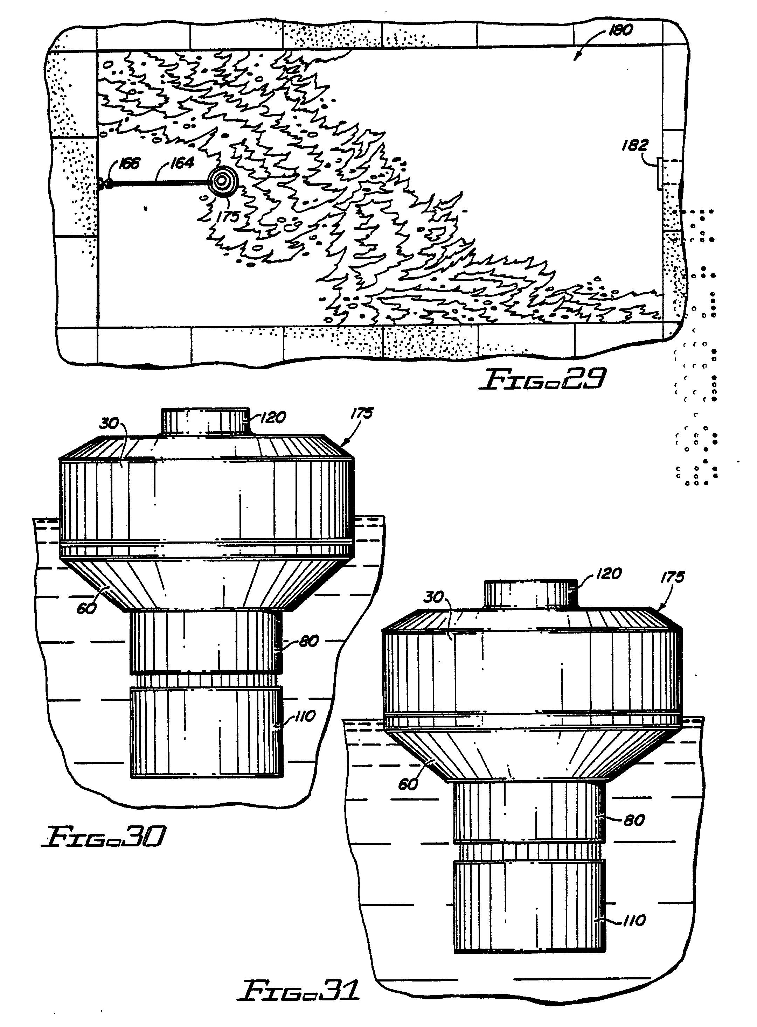

Moving now to Figures 6 and 7, a float bottom 60 is illustrated which will form the bottom half of the float assembly. As such, the float bottom 60 forms the bottom half of the sealed area which will be used to provide buoyancy to the feeder. This bottom half of the sealed area is located between a short float bottom outer cylinder 62 and a longer float bottom inner cylinder 64. The top of the float bottom outer cylinder 62 and the top of the float bottom inner cylinder 64 extend to the same height, with the bottom of the float bottom inner cylinder 64 extending downward further than does the bottom of the float bottom outer cylinder 62. The bottoms of the float bottom outer cylinder 62 and the float bottom inner cylinder 64 are both sealingly connected to an angled bottom surface 66 extending therebetween.

A shoulder 68 protrudes slightly inwardly from the float bottom inner cylinder 64 at the bottom side thereof. It will be perceived that the area inside the float bottom inner cylinder 64 is open at the top thereof, and inside the shoulder 68 at the bottom thereof. Located near to the bottom of the float bottom inner cylinder 64 are three tabs 70, 72, and 74 which are located at one-hundred-twenty degree increments around the inner circumference of the float bottom inner cylinder 64 and the shoulder 68. The tab 70 is shown in Figure 8 to present an essentially square cross-section inside the inner diameter of the shoulder 68, and to have a rounded surface at the bottom end of the tab 70 near to the bottom edge of the float bottom 60 as shown in Figure 9. The tabs 72 and 74 are identical in configuration to the tab 70.

The top edge of the float bottom outer cylinder 62 has located therein a cylindrical groove 76 which is narrower than the thickness of the float bottom outer cylinder 62. Likewise, the top edge of the float bottom inner cylinder 64 has located therein a cylindrical groove 78 which is narrower than the thickness of the float bottom inner cylinder 64. The cylindrical groove 78 is shown in detail in Figure 10, and the cylindrical groove 76 is identical in cross-sectional configuration to the cylindrical groove 78. In the preferred embodiments, the cylindrical grooves 76 and 78 are tapered slightly approaching the bottoms of the cylindrical grooves 76 and 78.

The assembly of the float assembly from the float top 30 and the float bottom 60 may now be discussed, with primary reference to Figures 1, 2, 6, and 7, and secondary reference to Figures 3 and 10. The bottom of the float top 30 is designed to mate with the top of the float bottom 60, with the cylindrical tongue 50 of the float top outer cylinder 32 fitting into the cylindrical groove 76 of the float bottom outer cylinder 62, and the cylindrical tongue 52 of the float top inner cylinder 34 fitting into the cylindrical groove 78 of the float bottom inner cylinder 64. The raised beads 54 and 56 serve to keep the cylindrical tongues 50 and 52, respectively, slightly raised from the bottoms of the cylindrical grooves 76 and 78, respectively.

In the preferred embodiment the cylindrical tongues 50 and 52 fit into the cylindrical grooves 76 and 78, respectively, with a slight clearance on all sides. A waterproof adhesive (not shown) may be installed into the cylindrical grooves 76 and 78, and the cylindrical tongues 50 and 52 may then be inserted into the cylindrical grooves 76 and 78, respectively. The slight clearance allows the waterproof adhesive to adhere to all sides of the cylindrical tongues 50 and 52 and the cylindrical grooves 76 and 78, thereby forming bonds of the maximum possible strength between the cylindrical tongue 50 and the cylindrical groove 76, and between the cylindrical tongue 52 and the cylindrical groove 78.

The float assembly consisting of the float top 30 and the float bottom 60 will appear as shown in Figure 22, and will contain a completely watertight compartment therein. It will be appreciated by those skilled in the art that it is necessary to use a bonding operation between the float top 30 and the float bottom 60 in order to obtain an absolutely watertight compartment. The bonding operation could also be performed by other techniques, such as the use of ultrasonic welding to achieve the desired watertight float assembly.

It will also be appreciated by those skilled in the art that the lengths of the float top outer cylinder 32 and the float top inner cylinder 34 in the float top 30 and the lengths of the float bottom outer cylinder 62 and the float bottom inner cylinder 64 in the float bottom 60 may be varied to vary the size of the watertight compartment. Similarly, the distance between the float top outer cylinder 32 and the float top inner cylinder 34 in the float top 30 and between the float bottom outer cylinder 62 and the float bottom inner cylinder 64 in the float bottom 60 may also be varied to vary the size of the watertight compartment.

It should also be noted that the lengths of the float top outer cylinder 32 and 34 in the float top 30 may be increased by a given amount while simultaneously decreasing the lengths of the float bottom outer cylinder 62 and the float bottom inner cylinder 64 in 60 by the same amount, with no effect on the size of the watertight compartment or the operation of the device. By the same token, the lengths of the float bottom outer cylinder 62 and 64 in the float bottom 60 may both be increased by a given amount while simultaneously decreasing the lengths of both the float top outer cylinder 32 and the float top inner cylinder 34 in the float top 30 by the same amount, with no effect on the size of the watertight compartment. The net effect of either of these changes will be the lowering or raising of the joint between the float top 30 and the float bottom 60 in the float assembly by varying the percentage of the total volume present in each of the float top 30 and the float bottom 60 (but not the total volume present), a key design requirement for the fourth aspect of the present invention, as will become apparent below in conjunction with the discussion of the operation of the present invention.

At this point, the metering valve which is the subject of the second aspect of the present invention will be discussed. Figures 11 and 12 illustrate a metering valve body 80 which is to be attached to the bottom side of the float bottom 60. The metering valve body 80 is essentially comprised of two cylindrical segments, one mounted on top of the other. The top of the metering valve body 80 is comprised of a metering valve body top cylinder 82. Located at the bottom of the metering valve body top cylinder 82 is a shoulder 84 connecting the bottom of the metering valve body top cylinder 82 to the top of a metering valve body bottom cylinder 86 having a smaller outer diameter than the outer diameter of the metering valve body top cylinder 82. In the preferred embodiment the outer diameter of the metering valve body bottom cylinder 86 is slightly less than the inner diameter of the metering valve body top cylinder 82, for reasons which will become apparent in conjunction with the discussion of the metering valve cap below.

The metering valve body top cylinder 82 has three notches 88, 90, and 92 in the top thereof, which notches 88, 90, and 92 are located one-hundred-twenty degrees apart around the top edge of the metering valve body top cylinder 82. The three notches 88, 90, and 92 extend longitudinally from the top edge of the metering valve body top cylinder 82 downward, and are configured to accept the three tabs 70, 72, and 74 when the top of the metering valve body top cylinder 82 is inserted into the bottom of the float bottom 60.

The outer diameter of the metering valve body top cylinder 82 is sized to allow the top portion of the metering valve body top cylinder 82 to be inserted into the bottom of the float bottom 60; therefore, the outer diameter of 82 is slightly less than the inner diameter of the shoulder 68 on the bottom of the float bottom 60. Located just below and extending around the top edge of the metering valve body top cylinder 82 on the outside thereof (except at the locations of the three notches 88, 90, and 92) is a tapered shoulder 94.

The tapered shoulder 94 is tapered on the top side to allow the top of the metering valve body top cylinder 82 to be forcibly inserted into the inner diameter of the shoulder 68 with the three notches 88, 90, and 92 in the metering valve body top cylinder 82 being lined up with the three tabs 70, 72, and 74 on the inside of the float top inner cylinder 34 (Figure 6). The top of the metering valve body top cylinder 82 may be inserted into the bottom of the float bottom 60 until the three tabs 70, 72, and 74 are fully inserted into the three notches 88, 90, and 92, at which point the metering valve body 80 is fully assembled to the float bottom 60.

As the top of the metering valve body top cylinder 82 is inserted into the bottom of the float bottom 60, the tapered shoulder 94 is forced past the shoulder 68 in the bottom of the float bottom 60. The taper in the tapered shoulder 94 allows it to move with some resistance past the shoulder 68 as the top of the metering valve body top cylinder 82 is inserted into the bottom of the float bottom 60. Immediately prior to the tabs 70, 72, and 74 being fully inserted into the notches 88, 90, and 92, the bottom edge of the tapered shoulder 94 will slip past the upper edge of the shoulder 68, locking the metering valve body 80 to the float bottom 60. It will be appreciated by those skilled in the art that it will be quite difficult to remove the metering valve body 80 from the float bottom 60 once they are assembled together, thereby assuring a strong assembly between the float assembly and the metering valve assembly. Additionally, the cooperating tabs 70, 72, and 74 and notches 88, 90, and 92 prevent rotational movement between the float assembly and the metering valve assembly.

The metering valve body bottom cylinder 86 is attached to the metering valve body top cylinder 82 at the shoulder 84, as stated previously. Referring to Figures 11 and 12, it will be noted that the top portion of the metering valve body bottom cylinder 86 is comprised of a plurality of longitudinally extending thin metering valve ribs 96 and a single metering valve wide rib 98 having therebetween a plurality of apertures 100. In the preferred embodiment there are thirty-four thin metering valve ribs 96 and the single wide metering valve rib 98 evenly spaced around the circumference of the top portion of the metering valve body bottom cylinder 86. The apertures 100 together represent the maximum flow area through the valve metering assembly.

Referring now to Figure 13, details which are molded into the wide metering valve rib 98 on the outer surface thereof are shown. These details are position markings 102, which position markings 102 comprise a plurality of segments of laterally extending lines evenly spaced from top to bottom on the wide metering valve rib 98. In the preferred embodiment, alternate ones of the position markings 102 are either longer or shorter than adjacent ones of the position markings 102. The position markings 102 will be used to indicate the degree to which the apertures 100 are open or closed.

Located around the outer circumference of the metering valve body bottom cylinder 86 below the thin metering valve ribs 96 and the wide metering valve rib 98 is a shoulder 104. also located around the outer circumference of the metering valve body bottom cylinder 86 and between the shoulder 104 and the bottom of the metering valve body bottom cylinder 86 are threads 106. In the preferred embodiment there are approximately four revolutions of threads 106 to provide a fine degree of adjustment for the valve metering mechanism. The function of the shoulder 104 and the threads 106 will become apparent below in conjunction with the discussion of the adjustment of the metering valve assembly.

Referring now to Figures 14 and 15, the second half of the metering valve will be described. A metering valve cap 110 which is essentially cylindrical has its top end open and its bottom end closed. The inside diameter of the metering valve cap 110 is sufficiently larger than the outside diameter of the metering valve body bottom cylinder 86 and the threads 106 thereon to allow the metering valve cap 110 to fit over the outside of the metering valve body bottom cylinder 86. In the preferred embodiment, the outside diameters of the metering valve body top cylinder 82 and the metering valve cap 110 are identical.

The length (or depth) of the metering valve cap 110 is sufficient to allow the top edge of the metering valve cap 110 to fit over the metering valve body bottom cylinder 86 against the underside of the shoulder 84 on the metering valve body 80, completely covering the apertures 100 in the metering valve body 80. In the preferred embodiment, the depth of the metering valve cap 110 is just sufficient to allow the metering valve cap 110 to fit over the metering valve body bottom cylinder 86 to the shoulder 84.

On the lower portion of the inside diameter of the metering valve cap 110 are threads 112 corresponding in pitch, size, and number of revolutions to the threads 106 on the outside of the lower portion of the metering valve body bottom cylinder 86. It will be apparent that when the metering valve cap 110 is inserted approximately half way onto the metering valve body bottom cylinder 86, the threads 112 in the metering valve cap 110 and the threads 106 on the metering valve body bottom cylinder 86 will engage to allow the metering valve cap 110 to be screwed to bring the metering valve cap 110 the rest of the way over the metering valve body bottom cylinder 86.

At the point at which the threads 112 are first engaged with the threads 106, the top of the metering valve cap 110 is just below the apertures 100. As the metering valve cap 110 is turned with respect to the metering valve body 80, the top of the metering valve cap 110 gradually closes the apertures 100. The apertures 100 are completely closed when the top of the metering valve cap 110 contacts the underside of the shoulder 84 on the metering valve body 80.

Located at the top of the metering valve cap 110 is a shoulder 114 extending around the circumference of the inside diameter of the metering valve cap 110. The shoulder 114 has a smaller inside diameter than the outside diameter of the shoulder 104 on the metering valve body bottom cylinder 86, and thus presents an interference fit for the metering valve cap 110 as it is inserted onto the metering valve body bottom cylinder 86. The shoulder 114 in the metering valve cap 110 must be forced past the shoulder 104 on the metering valve body bottom cylinder 86 before the threads 112 in the metering valve cap 110 will contact the threads 106 on the metering valve body bottom cylinder 86. The inside diameter of the shoulder 114 is sufficiently larger than the outside diameter of the metering valve body bottom cylinder 86 to allow the shoulder 114 to move freely past the thin metering valve ribs 96 and the wide metering valve rib 98.

It may therefore be appreciated that the interference fit between the shoulder 114 and the shoulder 104 will act to retain the metering valve cap 110 on the metering valve body 80. Even when the metering valve cap 110 is fully unscrewed from the metering valve body bottom cylinder 86, the shoulder 114 in the metering valve cap 110 will prevent the metering valve cap 110 from slipping by the shoulder 104 on the metering valve body bottom cylinder 86, thereby preventing the metering valve cap 110 from falling off of the metering valve body 80.

When the shoulder 114 in the metering valve cap 110 contacts the shoulder 104 on the metering valve body bottom cylinder 86, the metering valve cap 110 is nearly unscrewed (or fully unscrewed) from the metering valve body bottom cylinder 86, and the apertures 100 are fully open. In addition to preventing the metering valve cap 110 from falling off of the metering valve body 80 and into the pool, this design has at least one other desirable advantage. Since there are likely to be chlorine tablets (not shown) in the bottom of the metering valve cap 110, this feature will prevent the chlorine tablets from being inadvertently dumped in the pool when the metering valve cap 110 is fully unscrewed from the metering valve body bottom cylinder 86.

Completing the construction of the metering valve cap 110 are two tabs 116 and 118 which are located at the top of the metering valve cap 110 and which project inwardly. The tabs 116 and 118 are spaced one-hundred-eighty degrees apart, as best shown in Figure 14. One of the tabs 116 is also shown in a cross-sectional view in Figure 16, which demonstrates that the tabs 116 and 118 project inwardly somewhat further than does the shoulder 114. The tabs 116 and 118 project further inwardly than the radius of the outer diameter of the metering valve body bottom cylinder 86, particularly the portion of the metering valve body bottom cylinder 86 comprising the thin metering valve ribs 96 and the wide metering valve rib 98.

This will necessitate forcing the tabs 116 and 118 as well as the shoulder 114 of the metering valve cap 110 over the threads 106 and the shoulder 104 on the metering valve body bottom cylinder 86 during installation of the metering valve cap 110 onto the metering valve body 80. Once installed, the tabs 116 and 118 perform the valuable function of maintaining the metering valve cap 110 in the desired position on the metering valve body 80. The tabs 116 and 118 are of a width allowing them to fit into the apertures 100 between the thin metering valve ribs 96 and the wide metering valve rib 98 on the metering valve body bottom cylinder 86. Once the metering valve cap 110 has been turned to open or close the apertures 100 to the desired degree, the tabs 116 and 118 will maintain that adjustment indefinitely.

It should be noted that only a slight amount of interference fit is necessary for the tabs 116 and 118 to allow them to maintain the desired setting of the metering valve cap 110 on the metering valve body 80. Therefore, the metering valve cap 110 may be turned on the metering valve body 80 without exerting an undue amount of force. In the preferred embodiment, the tabs 116 and 118 are rounded slightly around the edges to enhance the ease of adjustment of the metering valve cap 110 on the metering valve body 80. It will be perceived by those skilled in the art that the metering valve described above presents substantial advantage over previously known metering devices.

Referring now to Figures 17-19, the last of the five major components of the floating feeder, and the third aspect of the present invention, is shown. A float cap 120 for installation on the top side of the float top 30 shown in Figures 1 and 2 is shown. The float cap 120 has a cylindrical portion 122 on the bottom side, which cylindrical portion 122 has a smaller outer diameter than the inner diameter of the float top inner cylinder 34 to allow the cylindrical portion 122 of the float cap 120 to fit inside the float top inner cylinder 34. The float cap 120 also has a circular flat portion 124 above and projecting outward slightly from the top of the cylindrical portion 122 to prevent the float cap 120 from fitting entirely into the float top inner cylinder 34. Accordingly, the outer diameter of the circular flat portion 124 is greater than the inner diameter of the float top inner cylinder 34 to allow the float cap 120 to be placed on the top of the float top 30.

The float cap 120 also has a grip portion 126 extending above the circular flat portion 124 and the cylindrical portion 122, to allow the float cap 120 to be gripped securely for installation or for removal. In the preferred embodiment, the grip portion 126 is merely a cylindrical segment, of a reduced diameter, fitting conveniently into the hand of the user of the device. Completing the discussion of the components making up the float cap 120 are an end-to-end series of four raised beads located circumferentially around the outside surface of the cylindrical portion 122 at a location near to the bottom of the cylindrical portion 122, which beads are designed to cooperate with the wide beads 38 and 40 and the narrow beads 42 and 44 inside the float top inner cylinder 34.

Two of the beads are wide beads 138 and 140, and two of the beads are narrow beads 142 and 144. The wide bead 138 is located intermediate the narrow bead 142 and the narrow bead 144, the narrow bead 142 is located intermediate the wide bead 138 and the wide bead 140, the wide bead 140 is located intermediate the narrow bead 142 and the narrow bead 144, and the narrow bead 144 is located intermediate the wide bead 140 and the wide bead 138.

The narrow beads 142 and 144 are similar to the narrow bead 44 shown in cross-section in Figure 4, only facing outwardly around outer surface of the cylindrical portion 122 of the float cap 120 rather than inwardly around the interior surface of the float top inner cylinder 34. Likewise, the wide beads 138 and 140 are similar to the wide bead 40 shown in cross-section in Figure 5, only again facing outwardly around the outer surface of the cylindrical portion 122 of the float cap 120 rather than inwardly around the interior surface of the float top inner cylinder 34. The wide beads 138 and 140 have the same height in cross section as the narrow beads 142 and 144, but the wide beads 138 and 140 project further outwardly from the cylindrical portion 122 of the float cap 120 than do the narrow beads 42 and 44.

The wide beads 138 and 140 of the float cap 120 may be (and are in the preferred embodiment) approximately the same size as the wide beads 38 and 40 of the float top 30. Similarly, the narrow beads 140 and 142 of the float cap 120 may be (and are in the preferred embodiment) approximately the same size as the narrow beads 40 and 42 of the float top 30. In the preferred embodiment, the wide beads 138 and 140 project outwardly from the cylindrical portion 122 of the float cap 120 approximately four times as far as do the narrow beads 142 and 144. Again, as a matter of practicality, the wide beads 138 and 140 should project inwardly at least twice as far as do the narrow beads 142 and 144. Each of the narrow beads 142 and 144 extend around the outside of the cylindrical portion 122 of the float cap 120 for slightly more than ninety degrees, and each of the wide beads 138 and 140 extend around the outside of the cylindrical portion 122 of the float cap 120 for slightly less than ninety degrees. In the preferred embodiment, on the float cap 120 (as on the float top 30) each of the narrow beads 142 and 144 extend around the outside of the cylindrical portion 122 of the float cap 120 for ninety-three degrees, and each of the wide beads 138 and 140 extend around the outside of the cylindrical portion 122 of the float cap 120 for eighty-seven degrees.

It will be perceived that the float cap 120 may be installed onto the float top 30 by aligning the beads on the float cap 120 with the opposite type beads on the float top 30, and lowering the cylindrical portion 122 of the float cap 120 into the float top inner cylinder 34. That is, for example, the wide beads 138 and 140 of the float cap 120 may be aligned with the narrow beads 42 and 44, respectively, of the float top 30, and the narrow beads 142 and 144 of the float cap 120 may be aligned with the wide beads 38 and 40, respectively, of the float top 30.

The float cap 120 may then be pressed down with the cylindrical portion 122 of the float cap 120 extending into the float top inner cylinder 34 until the flat portion 124 of the float cap 120 prevents the float cap 120 from being lowered further onto the float top 30. The float cap 120 may then be rotated ninety degrees to lock the float cap 120 onto the float top 30 with like beads on the float cap 120 and the float top 30 aligned. That is, for example, the wide beads 138 and 140 of the float cap 120 will be aligned with the wide beads 40 and 38, respectively, of the float top 30, and the narrow beads 142 and 144 of the float cap 120 will be aligned with the narrow beads 42 and 44, respectively, of the float top 30.

In the preferred embodiment, the inner radii of the curvature of the wide beads 38 and 40 around the inner surface of the float top inner cylinder 34 are slightly greater than the outer radii of the curvature of the narrow beads 142 and 144 around the cylindrical portion 122 of the float cap 120, and the inner radii of the curvature of the narrow beads 42 and 44 around the inner surface of the float top inner cylinder 34 are slightly greater than outer radii of the wide beads 138 and 140 around the cylindrical portion 122 of the float cap 120. This means that each time the float cap 120 is inserted onto or pulled off of the float top 30, there will be a pressing-type interference fit requiring the float cap 120 to be pressed onto or pulled off of the float top 30 with a force sufficient to overcome the pressing-type interference fit.

In addition, by locating the top edge of the wide beads 138 and 140 on the float cap 120 sufficiently closer to the flat portion 124 than the bottom edge of the wide beads 38 and 40 are to the surface of the float top 30 on which the flat portion 124 of the float cap 120 sits, the wide beads 38 and 40 on the float top 30 will contact the wide beads 138 and 140 on the float cap 120 in a rotational interference fit when the float cap 120 is inserted and turned on the float top 30. When the float cap 120 is turned ninety degrees, the rotational interference fit will make it essentially impossible to pull the float cap 120 off of the float top 30 when it has been turned ninety degrees to align like beads in a locked position.

It will also be appreciated that once the float cap 120 is locked onto the float top 30, turning the float cap 120 ninety degrees on the float top 30 requires force sufficient to overcome the rotational interference fit between the wide beads 38 and 40 and the wide beads 138 and 140. Even if the float cap 120 is turned the ninety degrees on the float top 30, the pressing-type interference fit must still be overcome to remove the float cap 120 from the float top 30. This two-stage interference fit of the float cap 120 onto the float top 30 makes the float cap 120 essentially childproof.

The reason for having the wide beads 38, 40, 138, and 140 extending circumferentially for less than ninety degrees each and the narrow beads 42, 44, 142, end 144 extending circumferentially for greater than ninety degrees each is now apparent. If the wide beads 38, 40, 138, and 140 were ninety degrees, it would be difficult to install or remove the float cap 120 from the float top 30, since an exact alignment would be required. By making the wide beads 38, 40, 138, and 140 approximately eighty-seven degrees in the preferred embodiment, and making the narrow beads 42, 44, 142, and 144 approximately ninety-three degrees, a plus-or-minus three degree rotational error is allowed in installing the float cap 120 onto or removing it from the float top 30.

Arrows may be located on the float cap 120 and on the float top 30 to assist in aligning the float cap 120 and the float top 30 in their respective open or locked positions. In Figure 17, a position-indicating arrow 146 is located on the top side of the circular flat portion 124 of the float cap 120 near the outer edge thereof. In Figure 1, an open position arrow 148 is placed on the top surface 36 of the float top 30 near the inner edge thereof in a position for alignment with the position-indicating arrow 146 on the float cap 120 when the float cap 120 is in an open position with respect to the float top 30 (meaning it can be pressed on or pulled off). Also in Figure 1, a closed position arrow 150 located ninety degrees from the open position arrow 148 is placed on the top surface 36 of the float top 30 near the inner edge thereof in position for alignment with the position-indicating arrow 146 on the float cap 120 when the float cap 120 is in a closed position with respect to the float top 30 (meaning it can not be pressed on or pulled off).

Referring now to Figure 23, the float cap 120 is shown installed on the float top 30 in the closed position. As may be seen in Figures 24 and 25, the wide beads 138 and 140 in the float cap 120 are aligned with the wide beads 38 and 40 in the float top 30, and the narrow beads 142 and 144 in the float cap 120 are aligned with the narrow beads 42 and 44 in the float top 30. The float cap 120 is accordingly drawn down tightly on the float top 30, and may not be removed by merely pulling it up from the float top 30, but must first be rotated ninety degrees to the open position to overcome the rotational interference fit.

Referring now to Figure 26, the float cap 120 is shown installed on the float top 30, but in the open position. As may be seen in Figures 27 and 28, the wide beads 138 and 140 of the float cap 120 are aligned with the narrow beads 42 and 44 of the shoe box 20, and the narrow beads 142 and 144 of the float cap 120 are aligned with the wide beads 38 and 40 of the float top 30. The float cap 120 may thus be removed from the float top 30 by pulling it upwards off of the float top 30 to overcome the pressing-type interference fit. It will be appreciated by those skilled in the art that the childproof cap of the present invention presents great advantage, particularly to those having small children who may otherwise tamper with the feeder.

Referring now to Figures 20, 21, and 29, the fifth aspect of the present invention is now described. A cord retainer 160 for insertion into the cord retainer recess 46 on the float top 30 is illustrated in Figure 20. The cord retainer 160 has a flat washer-shaped surface attached to a cylindrical segment. The cylindrical segment of the cord retainer 160 has tapered shoulder 162 thereon for engagement with the reduced diameter shoulder 48 in the cord retainer recess 46 in the float top 30. The taper on the tapered shoulder 162 allows it to move with some initial force past the reduced diameter shoulder 48, with removal of the cord retainer 160 requiring substantially a greater amount of force. Prior to insertion of the cord retainer 160 into the cord retainer recess 46 on the float top 30, one end of a tether cord 164 is attached to the cord retainer 160. In Figure 20, the one end of the tether cord 164 is inserted through an aperture in the cylindrical segment of the cord retainer 160 and knotted to prevent 164 from being pulled through the aperture in the cord retainer 160. It will be appreciated that a hook with a tapered shoulder thereon could be used instead of the cord retainer 160 illustrated in Figure 20.

The other end on the tether cord 164 is tied to a retainer hook 166 attached to a flat support surface 168. Installed on the flat support surface 168 is an adhesive 170 for retaining the flat support surface 168 and the retainer hook 166 on the side of a swimming pool. In the preferred embodiment a segment of double-sided waterproof tape may be used to secure the flat support surface 168 to the side of the swimming pool. Other waterproof adhesive methods well known in the art may also be used.

The tethering restrain of the present invention is shown in use in Figure 29. A swimming pool 180 is shown having a skimmer 182 through which water is removed from the swimming pool 180 at one end thereof. It will be recognized by those skilled in the art that a conventional floating feeder will inevitably drift toward the skimmer 182 due to water currents in the swimming pool 180.

The retainer hook 166 is accordingly attached to the side of the pool away from the skimmer 182, and the tether cord 164 is used to connect the floating feeder 175 to the retainer hook 166. The water currents will draw the floating feeder 175 toward the skimmer 18, but due to the restraining tether cord 164 of the present invention the floating feeder 175 will remain in the position shown in the central portion of the swimming pool 180, away from the walls of the swimming pool 180. Accordingly, the chlorine released by the floating feeder 175 will disperse before reaching any of the surfaces of the swimming pool 180, thereby preventing discoloration of the swimming pool 180.

An assembled floating feeder 175 constructed according to the teachings of the present invention is illustrated in Figure 22. The chlorine tablets held by the feeder are shown at numeral 600. The fourth aspect of the present invention may now be discussed in conjunction with Figures 30 and 31. As mentioned previously, the lengths of the float top outer cylinder 32 and 34 in the float top 30 may be increased by a given amount while simultaneously decreasing the lengths of the float bottom outer cylinder 62 and the float bottom inner cylinder 64 in 60 by the same amount, with no effect on the size of the watertight compartment or the operation of the device. Also, the lengths of the float bottom outer cylinder 62 and 64 in the float bottom 60 may both be increased by a given amount while simultaneously decreasing the lengths of both the float top outer cylinder 32 and the float top inner cylinder 34 in the float top 30 by the same amount, with no effect on the size of the watertight compartment. The net effect of either of these changes will be the lowering or raising of the joint between the float top 30 and the float bottom 60 in the float assembly.

By making the colors of the float top 30 and the float bottom 60 different, preferably different to a degree easily perceived by the eye from a distance, the location of the joint between the float top 30 and the float bottom 60 will be readily apparent. By designing the feeder so it will float with the joint above the waterline when empty and with the joint below the waterline when sufficient chlorine is contained therein, the feeder will provide a clear indication of whether or not it contains sufficient chlorine therein. The added weight of the chlorine will of course cause a feeder containing chlorine tablets to ride lower in the water than an empty feeder, or even one which contains less remaining chlorine.

The floating feeder 175 is shown in Figure 30 with a sufficient supply of chlorine therein, while the floating feeder 175 is shown in Figure 31 in an empty or nearly empty condition. It will be recognized by those skilled in the art that the floating feeder 175 could be designed to have the joint between the float top 30 and the float bottom 60 visible either when the floating feeder 175 is empty, or when the floating feeder 175 is nearly empty by adjusting the location of the joint as described above. For example, if a three day warning before the floating feeder 175 is empty is desired, the floating feeder 175 can be made to first float above the waterline when three days chlorine supply is left, with the floating feeder 175 then floating progressively higher as the chlorine supply decreases below three days supply.

For a longer warning, the joint is moved up on the float assembly by shortening the float top outer cylinder 32 and the float top inner cylinder 34 while lengthening the float bottom outer cylinder 62 and the float bottom inner cylinder 64. For a shorter warning, the joint is moved down on the float assembly by lengthening the float top outer cylinder 32 and the float top inner cylinder 34 while shortening the float bottom outer cylinder 62 and the float bottom inner cylinder 64.

The preferred colors for the float top 30 are lighter colors and the preferred colors for the float bottom 60 are darker colors. Darker colors are less visible under the water's surface, and as such are preferable for the float bottom 60. Since a high degree of contrast is desirable, the float top 30 should then be a lighter color. For example, the float bottom 60 may be black and the float top 30 may be gray. The colors are preferably molded into the float top 30 and the float bottom 60, but may also be painted on.

In a variation of the fourth aspect of the present invention, ballast weights (not shown) may used to vary the length of the warning given prior to chlorine depletion. The floating feeder 175 is made to have the joint between the float top 30 and the float bottom 60 visible above the waterline when the maximum desired warning is present, as for example four days prior to chlorine tablet depletion. Each of the ballast weights (not shown) are made equal to the weight of one day's chlorine tablets. By putting between one, two, three, or four weights in the feeder with the chlorine tablets, the warning is reduced from four days to three, two, one, or zero, respectively. This scheme works extremely well, and gives the user of the floating feeder 175 of the present invention the ability to select the desired warning period.

It is thus apparent from the above description of the preferred embodiment of the present invention that it teaches a floating feeder having a number of particular features and advantages not present in previously known floating feeder designs. The present invention presents in a first aspect a floating feeder which is both effective and easily and inexpensively manufactured. In the construction of the feeder, complex configurations are avoided so as to require only simple and inexpensive molds in the manufacture of the feeder. In the construction of the feeder of the present invention only a single adhesive operation is required to seal the float, with snap-together operation being used to the greatest extent possible.

A second aspect of the floating feeder of the present invention provides a metering mechanism which is altogether resistant to changes in the dispersion rate caused by bumping of the feeder, however severe. The adjustment of the metering mechanism over a wide range of dispersion rates is easily, quickly, and conveniently accomplished with a high degree of accuracy. Further, the metering mechanism is assembled in secure fashion, thus preventing both flimsy designs susceptible to easily breaking, and accidental readjustment of the feeder apertures.

The childproof cap, which is the third aspect of the present invention, effectively prevents small children from opening the feeder, yet allow easy access by adults to add more chlorine tablets to the feeder. In a fourth aspect, the floating feeder of the present invention includes means to provide a visual indication that the feeder has little or no chlorine remaining therein, and needs to be refilled. The visual indication is readily apparent, with even a casual glance in the general direction of the feeder indicating to an observer that the feeder needs to be refilled.

Finally, in a fifth aspect of the present invention, the floating feeder contains means to prevent it from being drawn to the same spot adjacent the edge of a swimming pool. The feeder is thus kept away from the edges of the swimming pool, thereby ensuring that the feeder will not spend an inordinate amount of time in any one spot to prevent the occurrences of isolated discolorations of the pool.

While attaining these objectives, the improved feeder has excellent strength and durability characteristics throughout to ensure a long life. The aforesaid objectives and advantages are accomplished by a design which is at once effective and easily and inexpensively manufactured, using as few parts as possible and snap-together assembly virtually throughout. Finally, the advantages and objectives are all attained while incurring no relative disadvantage.

Although an exemplary embodiment of the present invention has been shown and described, it will be apparent to those having ordinary skill in the art that a number of changes, modifications, or alterations to the invention as described herein may be made, none of which depart from the spirit of the present invention. All such changes, modifications, and alterations should therefore be seen as within the scope of the present invention.

## Claims

A floating device for continuously dispensing a chemical into a swimming pool at a controlled, preselected rate, comprising:
a float top defining a first volume open only at the bottom of said float top, said float top also having a centrally located first aperture therethrough which first aperture is open at the top and at the bottom of said float top;
a float bottom defining a second volume open only at the top of said float bottom, said float bottom also having a centrally located second aperture therethrough which second aperture is open at the top and at the bottom of said float bottom, the bottom of said float top being sealingly attached to the top of said float bottom to create a sealed, waterproof float assembly enclosing a volume including said first and second volumes, the bottom of said first aperture communicating with the top of said second aperture, said float assembly for providing buoyancy to support said device in a swimming pool;
a metering valve body having an upper segment for insertion into the interior of said second aperture at the bottom thereof, said metering valve body having a plurality of apertures therethrough;
means for retaining said upper segment of said metering valve body in the interior of said second aperture at the bottom thereof;
means for preventing rotation of said metering valve body relative to said float bottom;
a metering valve cap for movable mounting on said metering valve body, said metering valve cap selectively opening and closing said apertures through said metering valve body; and
a float cap for closing the top of said first aperture.

2. A device as defined in Claim 1, wherein said float top comprises:
a first cylindrical segment having a top and a bottom;
a second cylindrical segment having a top and a bottom, said second cylindrical segment having an outer diameter smaller than the inner diameter of said first cylindrical segment and being located inside said first cylindrical segment, the interior of said first cylindrical segment defining said first aperture; and
a top segment for closing the area between the tops of said first and second cylindrical segments;
and wherein said float bottom comprises:
a third cylindrical segment having a top and a bottom;
a fourth cylindrical segment having a top and a bottom, said fourth cylindrical segment having an outer diameter smaller than the inner diameter of said third cylindrical segment and being located inside said third cylindrical segment, the interior of said fourth cylindrical segment defining said second aperture; and
a bottom segment for closing the area between the bottoms of said third and fourth cylindrical segments;
wherein the bottom of said first cylindrical segment is sealingly connected to the top of said third cylindrical segment and the bottom of said second cylindrical segment is sealingly connected to the top of said fourth cylindrical segment to form said sealed volume defined by said first and second volumes.

3. A device as defined in Claims 1 or 2, wherein said retaining means comprises:
a shoulder protruding inwardly from said second aperture at the bottom thereof; and
a tapered shoulder extending around the outer edge of said metering valve body near the top thereof, said tapered shoulder being arranged and configured to allow the top of said metering valve body to be forcibly inserted into the inner diameter of said shoulder in said second aperture, said tapered shoulder once inserted past said shoulder in said second aperture resisting said metering valve assembly being removed from said second aperture.

4. A device as defined in any one of the preceding claims, wherein said preventing means comprises:
a plurality of tabs extending inwardly at equally spaced increments around the inner circumference of said second aperture near the bottom thereof, each of said plurality of tabs having an essentially square cross-section with a rounded surface at the bottom ends thereof; and
a plurality of notches at equally spaced increments around the top edge of said metering valve body, which notches extend longitudinally from the top edge of said metering valve body downward and are arranged and configured to accept said tabs when the top of said metering valve body is inserted into the bottom of said second aperture.

5. A device as defined in any one of the preceding claims, wherein said metering valve body is essentially cylindrical, said plurality of apertures in said metering valve body being longitudinally extending apertures located around at least a portion of the circumference thereof, said metering valve body also having a threaded portion thereof, and wherein said metering valve cap has a threaded portion for engagement with the threaded portion of said metering valve body, said metering cap when rotated with respect to said metering valve body moving longitudinally on said metering valve body to selectively open or close said longitudinally extending apertures on said metering valve body, said device additionally comprising:
means for preventing inadvertent rotational movement of said metering valve cap with respect to said metering valve body.

6. A dispenser as defined in Claim 5, wherein said metering valve body comprises:
a metering valve body top cylinder;
a metering valve body bottom cylinder having a diameter smaller than the diameter of said metering valve body top cylinder, the top portion of said metering valve body bottom cylinder comprising a plurality of longitudinally extending metering valve ribs defining therebetween said plurality of longitudinally extending apertures, the bottom of said metering valve body top cylinder being connected by a shoulder to the top of said metering valve body bottom cylinder, said longitudinally extending apertures being located at the top of said metering valve body bottom cylinder, said threaded portion of said metering valve body being located near the bottom of said metering valve body bottom cylinder on the outer surface thereof, wherein the inner diameter of said metering valve cap is slightly greater than the outer diameter of said metering valve body bottom cylinder to allow said metering valve cap to fit over the outer surface of said metering valve body bottom cylinder, said threads on said metering valve cap being located on the inside thereof, the top of said metering valve cap contacting said shoulder at the top of said metering valve body bottom cylinder when said metering valve cap is fully closing said longitudinally extending apertures.

7. A dispenser as defined in Claim 6, additionally comprising:
a plurality of segments of laterally extending position marking lines evenly spaced from top to bottom on the outside surface of one of said metering valve ribs, said position marking lines all being visible when said metering valve cap is positioned to fully open said longitudinally extending apertures, said position marking lines consecutively being covered by said metering valve cap as it closes said longitudinally extending apertures, the number of said position marking lines visible indicating the degree to which said longitudinally extending apertures are open.

8. A dispenser as defined in Claim 5, wherein said preventing means comprises:
a plurality of radially inwardly extending tabs located on said metering valve cap at the top thereof, said metering valve cap fitting over the bottom of said metering valve body, said tabs being arranged and configured to fit into said longitudinally extending apertures when the top of said metering valve cap partially or completely closes said longitudinally extending apertures, said tabs providing a resistance to rotational motion of said metering valve cap with respect to said metering valve body requiring a minimal force to overcome said resistance.

9. A dispenser as defined in Claim 5, additionally comprising retaining means for preventing the inadvertent removal of said metering valve cap from said metering valve body, said retaining means comprising:

a second shoulder located on the inner circumference of said metering valve cap at the top thereof; and

a third shoulder located on the outer circumference of said metering valve body below said longitudinally extending apertures, the inner diameter of said second shoulder being smaller than the outer diameter of said third shoulder, said metering valve cap being mounted over the bottom of said metering valve body and said second shoulder being forced past said third shoulder, said second and third shoulders then cooperating to prevent the inadvertent removal of said metering valve cap from said metering valve body, said second and third shoulders being so arranged and configured so that the top of said metering valve cap is at the bottom of said longitudinally extending apertures when said second shoulder is immediately above and adjacent to said third shoulder.

10. A device as defined in any one of the preceding claims, wherein said float cap for closing the top of said first aperture is a childproof float cap, said device additionally comprising:

retaining means for providing a first resistance to the placement of said float cap in an unlocked position on said float assembly, said retaining means also providing said first resistance to the removal of said float cap in said unlocked position from said float assembly, said retaining means providing a second resistance to the movement of said float cap from said unlocked position on said float assembly to a locked position on said float assembly, said retaining means also providing said second resistance to the movement of said float cap from said locked position on said float assembly to said unlocked position on said float assembly.

11. A device as defined in Claim 10, wherein said first resistance requires the exertion of sufficient downward force to overcome said first resistance when said float cap is being moved from a position removed from said float assembly to said unlocked position on said float assembly, and the exertion of sufficient upward force to overcome said first resistance when said float cap is being moved from said unlocked position on said float assembly to a position removed from said float assembly, and wherein said second resistance requires the exertion of sufficient rotational force to overcome said second resistance when said float cap is either moved from said unlocked position on said float assembly to said locked position on said float assembly, or moved from said locked position on said float assembly to said unlocked position on said float assembly, said rotational force required to overcome said second resistance when said float cap is moved from said unlocked position on said float assembly to said locked position on said float assembly being exerted in one direction, and said rotational force required to overcome said second resistance when said float cap is moved from said locked position on said float assembly to said unlocked position on said float assembly being exerted in the opposite direction.

12. A dispenser as defined in Claim 10, additionally comprising:

a first end-to-end series of four raised beads located circumferentially around the inside surface of said cylindrical aperture near the top thereof, two of said first series of raised beads being wide beads and two of said first series of raised beads being narrow beads, with said first series of raised beads alternating between wide and narrow beads; and

a cylindrical portion on the bottom of said float cap, said cylindrical portion having a smaller outer diameter than the inner diameter of said cylindrical aperture in said float assembly; and

a second end-to-end series of four raised beads located circumferentially around the outer surface of said cylindrical portion of said float cap near the bottom thereof, two of said second series of raised beads being wide beads and two of said second series of raised beads being narrow beads, with said second series of raised beads alternating between wide and narrow beads, said wide beads in said first series of raised beads projecting inwardly further than do said narrow beads in said first series of raised beads, said wide beads in said second series of raised beads projecting outwardly further than do said narrow beads in said second series of raised beads.

13. A dispenser as defined in Claim 12, wherein the inner radii of curvature of said wide beads in said first series of raised beads around the inner surface of said cylindrical aperture in said float assembly are slightly greater than the outer radii of curvature of said narrow beads in said second series of raised beads around said cylindrical portion of said float cap, and the inner radii of curvature of said narrow beads in said first series of raised beads around said cylindrical aperture in said float assembly are slightly greater than outer radii of curvature of said wide beads in said second series of raised beads around said cylindrical portion of said float cap, thereby providing said first resistance to said float cap being inserted onto or pulled off of said float assembly.

14. A dispenser as defined in Claim 12, additionally comprising:

a flat portion located above said cylindrical portion on said float cap, said flat portion contacting the top of said float assembly when said float cap is placed on said float assembly, wherein the top edge of each of said wide beads in said second series of raised beads is located closer to said flat portion on said float cap than the bottom edge of each of said wide beads in said first series of raised beads is located to the surface of said float assembly on which said flat portion of said float cap sits when said float cap is placed on said float assembly, thereby causing said wide beads in said first series of raised beads to contact said wide beads in said second series of raised beads in an interference fit providing said second resistance when said float cap is inserted and rotated on said float assembly, the interference fit between said wide beads in said first series of raised beads and said wide beads in said second series of raised beads making it essentially impossible to pull said float cap off of said float assembly when said float cap is in said locked position.

15. A device as defined in any one of the preceding claims, said float top being a first color and said float bottom being a second color different from said first color, said first and second colors presenting a high degree of contrast therebetween, said dispenser floating in said swimming pool with said float bottom entirely below the waterline when said dispenser contains an adequate supply of chlorine, said dispenser floating in said swimming pool with said float bottom partially above the waterline and said second color being visible when said dispenser contains an inadequate supply of chlorine or no chlorine, the warning period prior to depletion of chlorine or the like being increased by decreasing said first volume and increasing said second volume while maintaining said total volume constant, the warning period prior to depletion of chlorine or the like being decreased by increasing said first volume and decreasing said first volume while maintaining said total volume constant.

16. A device as defined in Claim 15, wherein said dispenser presents a warning period of several days prior to chlorine depletion, additionally comprising:
a plurality of ballast weights, each of said ballast weights weighing the same as one day's supply of chlorine tablets or the like used in said dispenser, wherein said warning period of several days is shortened by one day for each ballast weight placed in said dispenser.

17. A device as defined in any one of the preceding claims, additionally comprising:
a tether cord having two ends;
means for retaining one end of said tether cord to said float assembly;
means for securing the other end of said tether cord to a side of the swimming pool, said tether cord being of a length sufficient to maintain said dispenser away from the sides of said swimming pool, thereby preventing discoloration of the sides of said swimming pool.

18. A device as defined in Claim 17, wherein said retaining means comprises:

a cylindrical segment having a washer-shaped flat portion at one end thereof, wherein said cylindrical segment has an aperture therethrough, said one end of said tether cord being inserted through said aperture from said one end of said cylindrical segment to said other end of said cylindrical segment and being knotted at said other end of said cylindrical segment;
a tapered shoulder located around the outer circumference of said cylindrical segment at the other end thereof, said tapered shoulder allowing insertion of said cord retainer into said receiving means but resisting removal of said cord retainer from said receiving means once inserted;
a cylindrical recess in said float assembly; and
a shoulder located in the top side of said cylindrical recess, said shoulder having an inner diameter smaller than the inner diameter of said cylindrical recess.

19. A dispenser as defined in Claim 17, wherein said securing means comprises:
a retainer hook allowing said other end of said tether cord to be attached thereto; and
a flat surface connected to said retainer hook; and waterproof adhesive means for securing said flat surface to the side of said swimming pool.

FIG-1

FIG-2

FIG-3

FIG-4

FIG-5

FIG-8

FIG-9

FIG-10

Fig.6

Fig.7

Fig.11

Fig.13

**Fig. 12**

**Fig. 15**

**Fig. 14**

**Fig. 16**

**Fig. 24**

**Fig. 25**

**Fig. 27**

**Fig. 28**

*Fig.17*

*Fig.18*

*Fig.19*

*Fig.20*

*Fig.22*

*Fig.21*

Fig. 23

Fig. 26

_FIG.29_

_FIG.30_

_FIG.31_

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 351 231 (BAYROL)<br>* Page 4, line 2 - page 6, line 13; figure *<br>--- | 1,5,6,<br>10 | E 04 H 4/12<br>C 02 F 1/68 |
| A | US-A-4 630 634 (SASAKI)<br>* Column 3', line 34 - column 5, line 18; figures *<br>--- | 1,5,,6 | |
| A | US-A-4 217 331 (SCHAUB)<br>--- | | |
| A | US-A-4 798 707 (THOMAS)<br>----- | | |

**TECHNICAL FIELDS SEARCHED (Int. Cl.5)**

E 04 H
C 02 F

The present search report has been drawn up for all claims

| Place of search | Date of completion of the search | Examiner |
|---|---|---|
| THE HAGUE | 02-10-1989 | LAUE F.M. |